# FASCICULE DE BREVET EUROPEEN

(11) **EP 2 668 088 B1**
(45) Date de publication et mention de la délivrance du brevet: **17.06.2015**
(21) Numéro de dépôt: 11815475.6
(22) Date de dépôt: 20.12.2011
(51) Int. Cl.: B62D 25/02, B62D 25/08

(54) **STRUCTURE DE CAISSE ET VEHICULE COMPRENANT UNE TELLE STRUCTURE DE CAISSE**
KAROSSERIEAUFBAU UND FAHRZEUG MIT EINEM SOLCHEN KAROSSERIEAUFBAU
BODY SHELL STRUCTURE AND VEHICLE COMPRISING SUCH A BODY SHELL STRUCTURE

(30) Priorité: 27.01.2011 FR 1150628
(43) Date de publication de la demande: 04.12.2013
(73) Titulaire: Peugeot Citroën Automobiles SA, 78140 Vélizy Villacoublay (FR)
(72) Inventeur: THOMAS, Olivier, F-75014 Paris (FR)
(74) Mandataire: Fosse, Danièle
(86) Numéro de dépôt international: PCT/FR2011/053098
(87) Numéro de publication internationale: WO 2012/101339

(56) Documents cités:
- DE-A1-102008 058 005
- FR-A1- 2 924 674

## Description

La présente invention concerne une structure de caisse pour un véhicule. De plus, la présente invention concerne un véhicule comprenant au moins une telle structure de caisse. La présente invention trouve notamment application dans le domine de la carrosserie de véhicule, en particulier de véhicule automobile. Le document DE 10 2008 058 005 A1 décrit une structure selon le préambule de la revendication 1.

La caisse d'un véhicule, par exemple d'un véhicule automobile, définit un habitacle prolongé d'un compartiment à bagages. L'habitacle est délimité par un plancher d'habitacle, un pavillon de toit et des côtés de caisse. Le compartiment à bagages est défini par un plancher de coffre, un couvercle de compartiment de coffre et les parties arrière des côtés de caisse. L'habitacle est séparé du compartiment à bagages par une banquette arrière comprenant un dossier de sièges mobile entre une position repliée et une position redressée. En position redressée, un passager peut s'appuyer contre le dossier de sièges.

FR2922179A1 décrit une structure de caisse formant une partie de l'habitacle du véhicule et comprenant un passage de roue arrière, une doublure de custode, une plaque latérale d'appui pour le dossier de sièges et une tablette latérale arrière pour supporter en partie la plage arrière. La plaque latérale d'appui de dossier comporte généralement une serrure destinée au verrouillage d'un dossier de siège de la banquette arrière en position redressée. Lors d'un choc arrière, la banquette arrière est maintenue solidaire des plaques latérales d'appui par la serrure, laquelle est dimensionnée pour supporter les efforts considérables exercés sur la banquette arrière par les bagages contenus dans le compartiment à bagages.

D'après les normes en vigueur, les points de soudure solidarisant les pièces de tôlerie précitées doivent résister à l'arrachement, afin de ne pas désolidariser la plaque latérale d'appui ou la tablette latérale arrière de la doublure de custode. À cet effet, la structure de caisse de FR2922179A1 comporte une pièce de renfort liée à la doublure de custode, à la plaque latérale d'appui et à la tablette latérale arrière par des points de soudure électrique.

Cependant, cette pièce de renfort représente une pièce supplémentaire à stocker et à approvisionner lors de la fabrication de la structure de caisse. En outre, l'assemblage de cette pièce de renfort sur les autres pièces de tôlerie nécessite une préparation spécifique avant le ferrage.

La présente invention vise notamment à résoudre, en tout ou partie, les problèmes mentionnés ci-avant.

A cet effet, l'invention a pour objet une structure de caisse, pour un véhicule présentant un habitacle, la structure de caisse formant au moins une partie de l'habitacle et comprenant :
- un passage de roue destiné à capoter une partie d'une roue du véhicule ;
- une doublure de custode ;
- au moins un composant latéral formé en une plaque d'acier emboutie, le composant latéral étant disposé de façon à se trouver dans l'habitacle.

La structure de caisse est caractérisée en ce que le passage de roue comprend une partie de liaison substantiellement plate, en ce que la doublure de custode comprend une portion de liaison, et en ce qu'au moins un composant latéral comprend un élément de liaison. De plus, la partie de liaison, la portion de liaison et le ou chaque élément de liaison sont juxtaposés et solidarisés entre eux par au moins un point de soudure électrique.

En d'autres termes, l'assemblage des composants précités de la structure de caisse forme une liaison en triple épaisseur avec le passage de roue.

Ainsi, la structure de caisse présente une résistance mécanique élevée, en particulier aux efforts d'arrachement du composant latéral. Une telle structure de caisse ne nécessite pas de pièce de tôle emboutie supplémentaire.

Selon un mode de réalisation, la partie de liaison s'étend sur une partie avant du passage de roue, et au moins un composant latéral est une plaque latérale d'appui adaptée pour l'appui contre un dossier de siège.

Ainsi, un tel assemblage augmente la résistance à l'arrachement de la plaque latérale d'appui.

Selon un mode de réalisation, la partie de liaison s'étend sur une partie arrière du passage de roue, et au moins un composant latéral est une tablette latérale arrière destinée à supporter en partie la plage arrière du véhicule.

Ainsi, un tel assemblage augmente la résistance à l'arrachement de la tablette latérale arrière.

Selon un mode de réalisation, la portion de liaison et le ou chaque élément de liaison sont plans, et la partie de liaison est formée par une feuillure s'étendant dans la région périphérique du passage de roue.

Ainsi, la partie de liaison, la portion de liaison et le ou chaque élément de liaison peuvent être juxtaposés de façon simple et stable, ce qui permet de réaliser plus facilement chaque point de soudure électrique.

Selon un mode de réalisation, la partie de liaison est formée par une bande définissant partiellement ou totalement le contour du passage de roue, la bande ayant une largeur comprise entre 10 mm et 100 mm.

Ainsi, pour une bande d'environ 10 mm à 30 mm de large, on peut monter un passage de roue standard, en surélevant ce passage de roue de façon à placer la partie de liaison en contact de la portion de liaison et de l'élément de liaison. De plus, pour une bande d'environ 30 mm à 100 mm de large, on peut monter un passage de roue adapté, sans surélever sa partie basse et tout en plaçant la partie de liaison en contact de la portion de liaison et de l'élément de liaison.

Selon un mode de réalisation, le passage de roue, la doublure de custode et le ou chaque composant latéral sont formés respectivement d'une plaque en acier à haute déformation dont l'épaisseur est comprise entre 0,4 mm et 1,8 mm, de préférence entre 0,6 mm et 1,5 mm.

Ainsi, le passage de roue, la doublure de custode et le ou chaque composant latéral peuvent être usinés, en particulier emboutis, sans efforts excessifs.

Selon un mode de réalisation, le ou chaque point de soudure électrique résulte de la fusion localisée des plaques en acier formant respectivement le passage de roue, la doublure de custode et ledit au moins un composant latéral.

Ainsi, le ou chaque point de soudure électrique solidarise, de manière mécaniquement résistante, la partie de liaison, la portion de liaison et le ou chaque élément de liaison.

Selon un mode de réalisation, la partie de liaison, la portion de liaison et le ou chaque élément de liaison sont solidarisés entre eux par au moins deux, de préférence au moins trois, points de soudure électrique.

Ainsi, ces points de soudure électrique augmentent la résistance mécanique de la structure de caisse, en particulier la résistance à l'arrachement du composant latéral.

De plus, la présente invention a pour objet un véhicule présentant un habitacle et caractérisé en ce qu'il comprend au moins une structure de caisse telle que précédemment exposée.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue en perspective, de trois-quarts avant, d'une partie d'un véhicule conforme à un premier mode de réalisation de l'invention comprenant une structure de caisse conforme à un premier mode de réalisation de l'invention;
- la figure 2 est une vue en perspective, suivant la flèche Il à la figure 1 ;
- la figure 3 est une vue en perspective, suivant l'orientation de la flèche III à la figure 1, d'une partie d'un véhicule conforme à un deuxième mode de réalisation de l'invention comprenant une structure de caisse conforme à un deuxième mode de réalisation de l'invention.

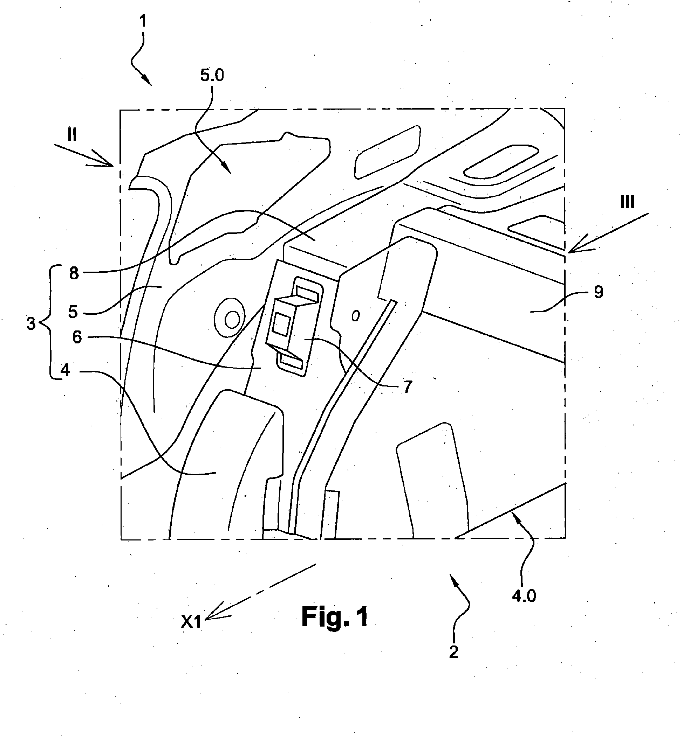

La figure 1 illustre une partie d'un véhicule 1 présentant un habitacle 2. Le véhicule 1 comprend au moins une structure de caisse 3 qui forme au moins une partie de l'habitacle 2.

La structure de caisse 3 comprend un passage de roue 4 qui a une forme générale de demi-cylindre de façon à capoter une partie d'une roue arrière non représentée du véhicule 1. Le passage de roue 4 présente une surface inférieure 4.0 qui est reliée à un plancher non représenté du véhicule 1 et qui est située approximativement à l'altitude de ce plancher.

Dans la présente demande, un élément qualifié par les termes « inférieur » ou « bas » ou un dérivé est situé plus près du sol ou du bas de caisse, lorsque le véhicule est en service, qu'un élément qualifié par les termes « supérieur » ou « haut » ou un dérivé.

La structure de caisse 3 comprend en outre une doublure de custode 5 qui forme une partie du côté de caisse du véhicule 1. La doublure de custode 5 comporte une ouverture 5.0 destinée à recevoir une vitre non représentée. La doublure 30 de custode est reliée à d'autres composants de renfort non représentés, tels qu'une doublure d'arche de pavillon, une doublure d'aile arrière, qui peuvent prolonger la doublure de custode 5 dans une direction longitudinale X1 du véhicule 1 respectivement vers l'avant et vers l'arrière.

Dans la présente demande, la direction longitudinale X1 correspond à la direction suivant laquelle le véhicule 1 avance en marche normale. Les termes « avant » et « arrière » se rapporte à la direction longitudinale X1.

La structure de caisse 3 comprend en outre une plaque latérale d'appui 6 qui est adaptée pour l'appui contre un dossier de siège non représenté du véhicule 1. Lorsque le véhicule 1 repose sur un support horizontal, la plaque latérale d'appui 6 s'étend approximativement verticalement et principalement au-dessus du passage de roue 4.

Dans la présente demande, le terme « latéral » et ses dérivés désigne un élément disposé près de l'un des côtés, droit et gauche, du véhicule 1.

La plaque latérale d'appui 6 comporte une serrure 7 qui est destinée au verrouillage du dossier de siège dans sa position redressée. Lors d'un choc arrière, la serrure 7 maintient solidaire le dossier de siège et la banquette arrière de la plaque latérale d'appui 6. La plaque latérale d'appui 6 et la serrure 7 sont dimensionnées pour supporter les efforts considérables qui sont exercés sur la banquette arrière par les bagages contenus dans le compartiment à bagages.

La structure de caisse 3 comprend aussi une tablette latérale arrière 8. La tablette latérale arrière 8 est destinée à former, avec une tablette arrière 9, un support pour tout ou partie de la plage arrière non représentée du véhicule 1.

La tablette arrière 9 s'étend entre les tablettes latérales arrière 8 et équivalent, donc entre les côtés de caisse, de façon à former une liaison transversale des côtés d'habitacle. La tablette arrière 9 et la doublure de custode 5 contribuent à former un anneau de rigidification qui a notamment pour fonction de limiter la torsion des structures de caisse 3 et équivalent, donc de la caisse du véhicule 1, lorsque le véhicule 1 est en service. En effet, un tel anneau de rigidification permet de répartir les efforts dissymétriques induits par le roulage du véhicule 1.

Lorsque le véhicule 1 repose sur un support horizontal, la plaque latérale d'appui 6 s'étend de façon sensiblement plane et horizontale, à une altitude supérieure à celle du haut du passage de roue 4. La plaque latérale d'appui 6 est adaptée pour l'appui contre un dossier de siège non représenté appartenant à une banquette arrière non représentée.

La plaque latérale d'appui 6 et la tablette latérale arrière 8 forment des composants latéraux disposés de façon à se trouver dans l'habitacle 2, c'est-à-dire du côté interne de la doublure de custode 5.

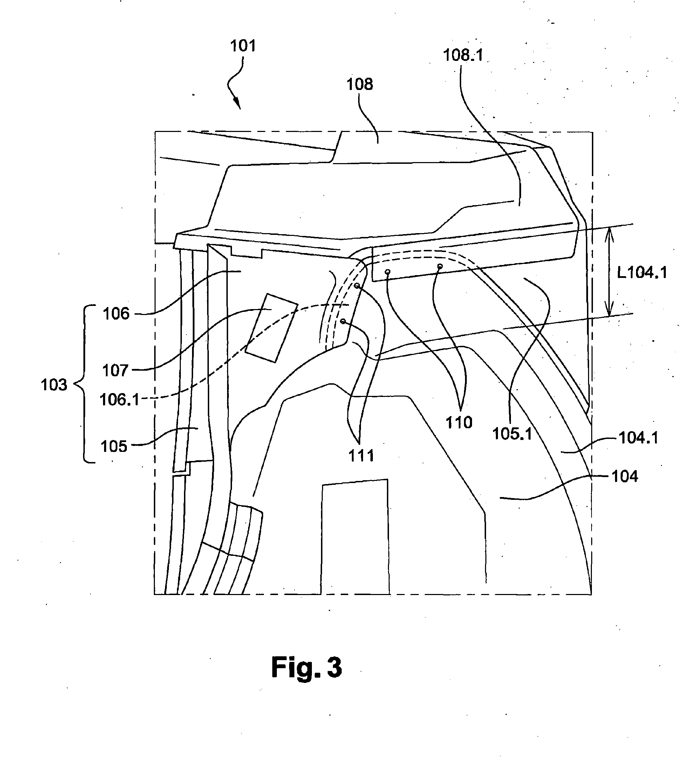

Le passage de roue 4, la doublure de custode 5, la plaque latérale d'appui 6 et la tablette latérale arrière 8 sont formées de plaques d'acier embouties, de préférence de plaques en acier doux de nuance ES, à haute déformation. L'épaisseur de ces plaques est comprise entre 0,4 mm et 1,8 mm, de préférence entre 0,6 mm et 1,5 mm. Dans l'exemple des figures 1 à 3, le passage de roue 4, la doublure de custode 5, la plaque latérale d'appui 6 et la tablette latérale arrière 8 ont des épaisseurs respectives d'environ 0,97 mm, 0,67 mm, 1,17 mm et 1,17 mm.

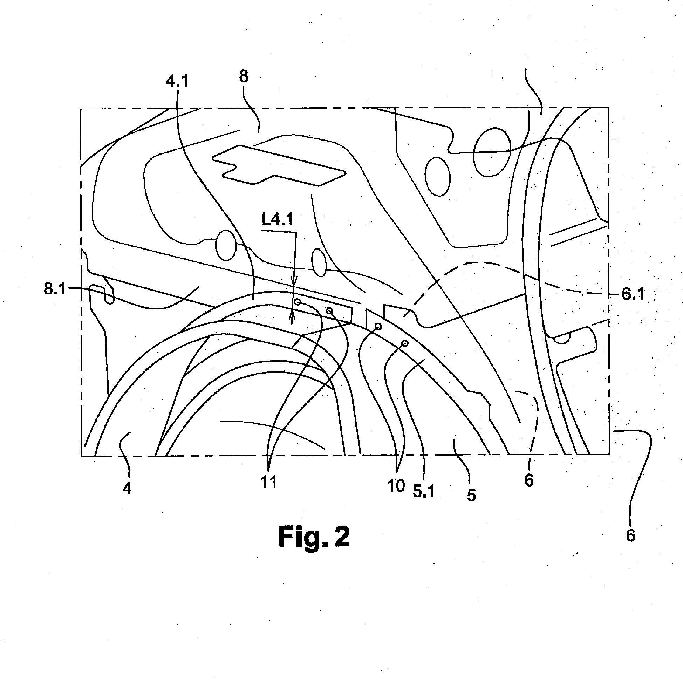

Comme le montre la figure 2, le passage de roue 4 comprend une partie de liaison 4.1 qui est substantiellement plate. La partie de liaison 4.1 est formée par une bande qui définit en partie le contour supérieur du passage de roue 4. En d'autres termes, la partie de liaison 4.1 est formée par une feuillure s'étendant dans la région périphérique du passage de roue 4.

Dans l'exemple de la figure 2, la partie de liaison 4.1 s'étend, d'une part, sur une partie avant du passage de roue 4 et, d'autre part, sur une partie arrière du passage de roue 4. La partie de liaison 4.1 a une largeur L4.1 comprise entre 10 mm et 30 mm, en l'occurrence environ égale à 20 mm.

La doublure de custode 5 comprend une portion de liaison 5.1 et la plaque latérale d'appui 6 comprend un premier élément de liaison 6.1. La portion de liaison 5.1 et le premier élément de liaison 6.1 sont formés ici par des feuillures de la doublure de custode 5 et de la plaque latérale d'appui 6 repliées de façon à s'étendre dans un plan sensiblement vertical. La portion de liaison 5.1 et le premier élément de liaison 6.1 sont plans dans l'exemple des figures 1 et 2.

La partie de liaison 4.1, la portion de liaison 5.1 et le premier élément de liaison 6.1 sont juxtaposés et solidarisés entre eux par deux points de soudure électrique 10.

Chaque point de soudure électrique 10 résulte de la fusion localisée des trois plaques en acier formant respectivement le passage de roue 4, la doublure de custode 5 et la plaque latérale d'appui 6. Les points de soudure électrique 10 réalisent donc des soudures « à triple épaisseur ».

Dans la présente demande, le terme « juxtaposés » se rapporte à plusieurs éléments, par exemple trois, qui sont placés en contact deux à deux. En d'autres termes, l'un des éléments juxtaposés est en contact avec un ou deux autre(s) des éléments juxtaposés.

De même, la tablette latérale arrière 8 comprend un deuxième élément de liaison 8.1, qui est aussi formé par une feuillure repliée de façon à s'étendre dans un plan sensiblement vertical. Le deuxième élément de liaison 8.1 est donc plan dans l'exemple des figures 1 et 2.

La partie haute du passage de roue 4 est surélevée par rapport à un passage de roue conventionnel, ce qui permet de placer la partie de liaison 4.1 en contact de la portion de liaison 5.1 et les premier 6.1 et deuxième 8.1 éléments de liaison. Le premier élément de liaison 6.1 et le deuxième élément de liaison 8.1 forment des éléments de liaison respectivement pour la plaque latérale d'appui 6 et pour la tablette latérale arrière 8.

La partie de liaison 4.1, la portion de liaison 5.1 et le deuxième élément de liaison 8.1 sont juxtaposés et solidarisés entre eux par deux points de soudure électrique 11.

Chaque point de soudure électrique 11 résulte de la fusion localisée des trois plaques en acier formant respectivement le passage de roue 4, la doublure de custode 5 et la tablette latérale arrière 8. Les points de soudure électrique 11 réalisent donc des soudures « à triple épaisseur ».

La figure 4 illustre un véhicule 101 et une structure de caisse 103 conformes à un deuxième mode de réalisation. La description du véhicule 1 et de la structure de caisse 3 donnée ci-avant peut être transposée au véhicule 101 et à la structure de caisse 103, à l'exception des différences énoncées ci-après. Un élément de la structure de caisse 103 semblable ou correspondant à un élément de la structure de caisse 3 porte la même référence numérique augmentée de 100.

On définit ainsi un passage de roue 104 et une partie de liaison 104.1, la doublure de custode 105 et une portion de liaison 105.1, une plaque latérale d'appui 106 et un premier élément de liaison 106.1, une serrure 107, une tablette latérale arrière 108 et un deuxième élément de liaison 108.1, ainsi que des points de soudure électrique 110 et 111.

La structure de caisse 103 diffère de la structure de caisse 3, car la partie haute du passage de roue 104 n'est pas surélevée. Pour placer la partie de liaison 104.1 en contact de la portion de liaison 105.1 et les premier 106.1 et deuxième 108.1 éléments de liaison, c'est la feuillure qui forme la partie de liaison 104.1 qui est élargie par rapport à la feuillure formant la partie de liaison 4.1. Ainsi, la partie de liaison 104.1 a une largeur L104.1 comprise entre 30 mm et 100 mm, en l'occurrence environ égale à 80 mm.

En service, les points de soudure 10 et 11 permettent de résister à un effort d'arrachement supérieur à 5000 N, alors que les assemblages de l'art antérieur, généralement à soudures en « double épaisseur », ne résistent pas à un effort d'arrachement supérieur à 2000 N. On obtient ainsi un assemblage qui présente une résistance mécanique élevée, en particulier aux efforts d'arrachement, c'est-à-dire aux efforts exercés suivant une direction normale aux feuillures solidaires.

Selon d'autres caractéristiques avantageuses mais facultatives, prises isolément ou selon toute combinaison techniquement admissible :
- la partie de liaison, la portion de liaison et chaque élément de liaison -plaque latérale d'appui ou tablette latérale arrière-sont solidarisés entre eux par un seul point de soudure électrique, au lieu de deux dans l'exemple des figures ;
- les composants tels que passage de roue, doublure de custode, plaque latérale d'appui et tablette latérale arrière, peuvent être formés en une seule tôle d'acier emboutie ou en plusieurs pièces assemblées par exemple par soudure.

## Revendications

1. Structure de caisse (3 ; 103), pour un véhicule (1 ; 101) présentant un habitacle, la structure de caisse (3 ; 103) formant au moins une partie de l'habitacle (2) et comprenant :
- un passage de roue (4 ; 104) destiné à capoter une partie d'une roue du véhicule (1 ; 101) ;
- une doublure de custode (5 ; 105) ;
- au moins un composant latéral (6, 8 ; 106, 108) formé en une plaque d'acier emboutie, le composant latéral (6, 8 ; 106, 108) étant disposé de façon à se trouver dans l'habitacle (2) ;
la structure de caisse (3 ; 103) étant **caractérisée en ce que** le passage de roue (4; 104) comprend une partie de liaison (4.1 ; 104.1) substantiellement plate, **en ce que** la doublure de custode (5 ; 105) comprend une portion de liaison (5.1 ; 105.1), et **en ce qu'**au moins un composant latéral (6, 8 ; 106, 108) comprend un élément de liaison (6.1, 8.1 ; 106.1 ; 108.1) ;
la partie de liaison (4.1 ; 104.1), la portion de liaison (5.1 ; 105.1) et le ou chaque élément de liaison (6.1, 8.1 ; 106.1 ; 108.1) étant juxtaposés et solidarisés entre eux par au moins un point de soudure électrique (10, 11 ; 110, 111).

2. Structure de caisse (3 ; 103) selon la revendication 1, dans laquelle la partie de liaison (4.1 ; 104.1) s'étend sur une partie avant du passage de roue (4 ; 104), et dans laquelle au moins un composant latéral (6 ; 108) est une plaque latérale d'appui adaptée pour l'appui contre un dossier de siège.

3. Structure de caisse (3 ; 103) selon l'une des revendications précédentes, dans laquelle la partie de liaison (4.1 ; 104.1) s'étend sur une partie arrière du passage de roue (4 ; 104), et dans laquelle au moins un composant latéral (8 ; 108) est une tablette latérale arrière destinée à supporter en partie la plage arrière du véhicule (1 ; 101).

4. Structure de caisse (3 ; 103) selon l'une des revendications précédentes, dans laquelle la portion de liaison (5.1 ; 105.1) et le ou chaque élément de liaison (6.1, 8.1 ; 106.1 ; 108.1) sont plans, et dans laquelle la partie de liaison (4.1 ; 104.1) est formée par une feuillure s'étendant dans la région périphérique du passage de roue (4 ; 104)

5. Structure de caisse (3 ; 103) selon l'une des revendications précédentes, dans laquelle la partie de liaison (4.1 ; 104.1) est formée par une bande définissant partiellement ou totalement le contour du passage de roue (4 ; 104), la bande ayant une largeur (L4.1 ; L104.1) comprise entre 10 mm et 100 mm.

6. Structure de caisse (3 ; 103) selon l'une des revendications précédentes, dans laquelle le passage de roue (4 ; 104), la doublure de custode (5 ; 105) et le ou chaque composant latéral (6, 8 ; 106, 108) sont formés respectivement d'une plaque en acier à haute déformation dont l'épaisseur est comprise entre 0,4 mm et 1,8 mm, de préférence entre 0,6 mm et 1,5 mm.

7. Structure de caisse (3 ; 103) selon la revendication 6, dans laquelle le ou chaque point de soudure électrique (10, 11 ; 110, 111) résulte de la fusion localisée des plaques en acier formant respectivement le passage de roue (4 ; 104), la doublure de custode (5 ; 105) et ledit au moins un composant latéral (6, 8 ; 106, 108).

8. Structure de caisse (3 ; 103) selon l'une des revendications précédentes, dans laquelle la partie de liaison (4.1 ; 104.1), la portion de liaison (5.1 ; 105.1) et le ou chaque élément de liaison (6.1, 8.1 ; 106.1 ; 108.1) sont solidarisés entre eux par au moins deux, de préférence au moins trois, points de soudure électrique (10, 11 ; 110, 111).

9. Véhicule (1 ; 101) présentant un habitacle, le véhicule (1 ; 101) étant **caractérisé en ce qu'**il comprend au moins une structure de caisse (3 ; 103) selon l'une des revendications précédentes.

## Patentansprüche

1. Karosserieaufbau (3; 103) für ein Fahrzeug (1; 101), das eine Fahrgastzelle aufweist, wobei der Karosserieaufabau (3; 103) mindestens einen Teil der Fahrgastzelle (2) bildet und Folgendes umfasst:
- einen Radlauf (4; 104), der dazu bestimmt ist, einen Teil eines Rads des Fahrzeugs (1; 101) abzudecken,
- eine Auskleidung des Karosserieteils über dem Hinterrad (5; 105),
- mindestens ein seitliches Bauteil (6, 8; 106, 108), das aus einer gestanzten Stahlplatte geformt ist, wobei das seitliche Bauteil (6, 8; 106, 108) derart angeordnet ist, dass es sich in der Fahrgastzelle (2) befindet,
Karosserieaufbau (3; 103) **dadurch gekennzeichnet, dass** der Radlauf (4; 104) einen Verbindungsteil (4.1; 104.1) umfasst, der im Wesentlichen flach ist, dass die Auskleidung des Karosserieteils über dem Hinterrad (5; 105) einen Verbindungsabschnitt (5.1; 105.1) umfasst, und dass mindestens ein seitliches Bauteil (6, 8; 106, 108) ein Verbindungselement (6.1, 8.1; 106.1; 108.1) umfasst,
wobei der Verbindungsteil (4.1; 104.1), der Verbindungsabschnitt (5.1; 105.1) und das oder jedes Verbindungselement (6.1, 8.1; 106.1; 108.1) nebeneinanderliegen und miteinander durch mindestens einen Elektroschweißpunkt (10, 11; 110, 111) fest verbunden sind.

2. Karosserieaufbau (3; 103) nach Anspruch 1, bei dem sich der Verbindungsteil (4.1; 104.1) auf einem vorderen Teil des Radlaufs (4; 104) erstreckt, und bei dem mindestens ein seitliches Bauteil (6; 108) eine seitliche Auflageplatte ist, die für das Aufliegen gegen eine Rückenlehne angepasst ist.

3. Karosserieaufbau (3; 103) nach einem der vorhergehenden Ansprüche, bei dem sich der Verbindungsteil (4.1; 104.1) auf einem hinteren Teil des Radlaufs (4; 104) erstreckt, und bei dem mindestens ein seitliches Bauteil (8; 108) eine seitliche hintere Platte ist, die dazu bestimmt ist, die Heckablage des Fahrzeugs (1; 101) mindestens teilweise zu tragen.

4. Karosserieaufbau (3; 103) nach einem der vorhergehenden Ansprüche, bei dem der Verbindungsabschnitt (5.1; 105.1) und das oder jedes Verbindungselement (6.1, 8.1; 106.1; 108.1) flach sind, und bei dem der Verbindungsteil (4.1; 104.1) aus einem Falz ausgebildet ist, der sich in dem Umfangsbereich des Radlaufs (4; 104) erstreckt.

5. Karosserieaufbau (3; 103) nach einem der vorhergehenden Ansprüche, bei dem der Verbindungsteil (4.1; 104.1) aus einem Band ausgebildet ist, das teilweise oder vollständig die Kontur des Radlaufs (4; 104) definiert, wobei das Band eine Breite (L4.1; L104.1) hat, die zwischen 10 mm und 100 mm liegt.

6. Karosserieaufbau (3; 103) nach einem der vorhergehenden Ansprüche, bei dem der Radlauf (4; 104), die Auskleidung des Karosserieteils über dem Hinterrad (5; 105) und das oder jedes seitliche Bauteil (6, 8; 106, 108) jeweils aus einer Stahlplatte mit hoher Verformung ausgebildet sind, deren Stärke zwischen 0,4 mm und 1,8 mm, vorzugsweise 0,6 mm und 1,5 mm liegt.

7. Karosserieaufbau (3; 103) nach Anspruch 6, bei dem der oder jeder Elektroschweißpunkt (10, 11; 110, 111) aus dem stellenweisen Schmelzen der Stahlplatten, die jeweils den Radlauf (4; 104), die Auskleidung des Karosserieteils über dem Hinterrad (5; 105) und das mindestens eine seitliche Bauteil (6, 8; 106, 108) bilden, resultiert.

8. Karosserieaufbau (3; 103) nach einem der vorhergehenden Ansprüche, wobei der Verbindungsteil (4.1; 104.1), der Verbindungsabschnitt (5.1; 105.1) und das oder jedes Verbindungselement (6.1, 8.1; 106.1; 108.1) miteinander durch mindestens zwei, vorzugsweise mindestens drei Elektroschweißpunkte (10, 11; 110, 111) fest verbunden sind.

9. Fahrzeug (1; 101), das eine Fahrgastzelle aufweist, wobei das Fahrzeug (1; 101) **dadurch gekennzeichnet ist, dass** es mindestens einen Karosserieaufbau (3; 103) nach einem der vorhergehenden Ansprüche umfasst.

## Claims

1. A body shell structure (3; 103) for a vehicle (1; 101) having a passenger compartment, the body shell structure (3; 103) forming at least a part of the passenger compartment (2) and including:
- a wheel arch (4; 104) intended to cover a part of a wheel of the vehicle (1; 101);
- a quarter panel lining (5; 105);
- at least one lateral component (6, 8; 106, 108) formed of a pressed steel sheet, the lateral component (6, 8; 106, 108) being disposed so as to be situated in the passenger compartment (2);
the body shell structure (3; 103) being **characterized in that** the wheel arch (4; 104) includes a substantially flat connecting part (4.1; 104.1), **in that** the quarter panel lining (5; 105) includes a connecting portion (5.1; 105.1), and **in that** at least one lateral component (6, 8; 106, 108) includes a connecting element (6.1, 8.1; 106.1; 108.1);
the connecting part (4.1; 104.1), the connecting portion (5.1; 105.1) and the or each connecting element (6.1, 8.1; 106.1; 108.1) being juxtaposed and joined together by at least one electric arc spot weld (10, 11; 110, 111).

2. The body shell structure (3; 103) according to claim 1, in which the connecting part (4.1; 104.1) extends over a front part of the wheel arch (4; 104), and in which at least one lateral component (6; 108) is a lateral support plate adapted for resting against a seatback.

3. The body shell structure (3; 103) according to one of the preceding claims, in which the connecting part (4.1; 104.1) extends over a rear part of the wheel arch (4; 104), and in which at least one lateral component (8; 108) is a lateral rear sill intended to support in part the rear parcel shelf of the vehicle (1; 101).

4. The body shell structure (3; 103) according to one of the preceding claims, in which the connecting portion (5.1; 105.1) and the or each connecting element (6.1, 8.1; 106.1; 108.1) are flat, and in which the connecting part (4.1; 104.1) is formed by a rebate extending in the peripheral region of the wheel arch (4; 104).

5. The body shell structure (3; 103) according to one of the preceding claims, in which the connecting part (4.1; 104.1) is formed by a band defining partially or totally the contour of the wheel arch (4; 104), the band having a width (L4.1; L104.1) comprised between 10 mm and 100 mm.

6. The body shell structure (3; 103) according to one of the preceding claims, in which the wheel arch (4; 104), the quarter panel lining (5; 105) and the or each lateral component (6, 8; 106, 108) are formed respectively by a high deformation steel sheet, the thickness of which is comprised between 0.4 mm and 1.8 mm, preferably between 0.6 mm and 1.5 mm.

7. The body shell structure (3; 103) according to claim 6, in which the or each electric arc spot weld (10, 11; 110, 111) results from the localized fusion of the steel sheets forming respectively the wheel arch (4; 104), the quarter panel lining (5; 105) and the said at least one lateral component (6, 8; 106, 108).

8. The body shell structure (3; 103) according to one of the preceding claims, in which the connecting part (4.1; 104.1), the connecting portion (5.1; 105.1) and the or each connecting element (6.1, 8.1; 106.1; 108.1) are joined together by at least two, preferably at least three electric arc spot welds (10, 11; 110, 111).

9. A vehicle (1; 101) having a passenger compartment, the vehicle (1; 101) being **characterized in that** it includes at least one body shell structure (3; 103) according to one of the preceding claims.
